(19) Europäisches Patentamt
European Patent Office
Office européen des brevets

(11) **EP 4 789 794 A1**

(12) **EUROPEAN PATENT APPLICATION**

(43) Date of publication:
**12.08.2026 Bulletin 2026/33**

(21) Application number: **26152301.3**

(22) Date of filing: **16.01.2026**

(51) International Patent Classification (IPC):
***B22F 1/00*** *(2022.01)* ***B22F 3/10*** *(2006.01)*
***B22F 7/06*** *(2006.01)* ***B22F 7/08*** *(2006.01)*
***B22F 10/14*** *(2021.01)* ***B33Y 10/00*** *(2015.01)*
***B33Y 70/00*** *(2020.01)* ***C22C 1/04*** *(2023.01)*
***C22C 21/00*** *(2006.01)* *B22F 1/102* *(2022.01)*

(52) Cooperative Patent Classification (CPC):
**B33Y 70/00; B22F 1/09; B22F 3/1021; B22F 3/1035; B22F 7/062; B22F 7/08; B22F 10/14; B33Y 10/00; C22C 1/0416; C22C 1/0458; C22C 21/00; C22C 21/02;** B22F 1/102; C22C 2200/00

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **20.01.2025 JP 2025007355**
**24.10.2025 JP 2025179961**

(71) Applicant: **Ricoh Company, Ltd.**
**Tokyo 143-8555 (JP)**

(72) Inventors:
- **Oya, Naoki**
  **Tokyo, 143-8555 (JP)**
- **Satoh, Shinichiroh**
  **Tokyo, 143-8555 (JP)**
- **Shiba, Keisuke**
  **Tokyo, 143-8555 (JP)**
- **Iso, Kosei**
  **Tokyo, 143-8555 (JP)**
- **Fukase, Yasushi**
  **Tokyo, 143-8555 (JP)**

(74) Representative: **Marks & Clerk LLP**
**15 Fetter Lane**
**London EC4A 1BW (GB)**

# (54) POWDER MATERIAL, METHOD OF MANUFACTURING THREE-DIMENSIONAL OBJECT, AND METHOD OF MANUFACTURING JOINED OBJECT

(57) Powder material from which three-dimensional object having high density and excellent shape retainability can be manufactured is provided. Powder material contains: first powder composed of first alloy; and second powder composed of pure metal or second alloy having composition different from first alloy. Difference (A-B) between melting point (A) of first powder and melting point (B) of second powder is ≥15°C and ≤200°C. Content of second powder is ≥7mass% and ≤30mass% relative to total amount of powder material. Area-weighted average grain size of sintered body obtained by sintering powder material at maximum temperature between melting points of first powder and second powder is less than 1.80 times volume average grain size of first powder, and/or, the first alloy is a titanium alloy which contains at least boron (B), or an aluminum alloy which contains at least one of chromium (Cr), zirconium (Zr), scandium (Sc), or manganese (Mn).

FIG.1

DEBINDING STEP
SINTERING STEP
TEMPER-ATURE
TIME

EP 4 789 794 A1

## Description

BACKGROUND OF THE INVENTION

Field of the Invention

The present disclosure relates to a powder material, a method of manufacturing a three-dimensional object, and a method of manufacturing a joined object.

Description of the Related Art

In recent years, additive manufacturing techniques for manufacturing high-definition three-dimensional objects composed of metals and ceramics have attracted attention. As additive manufacturing techniques, for example, a selective laser sintering (SLS) method of solidifying a powder layer melted by selective laser irradiation, a electron beam melting (EBM) method of solidifying a powder layer melted with an electron beam, a binder jet (BJT) method of solidifying a powder layer by applying a liquid binder (liquid modeling agent), and the like are known.

As a conventional additive manufacturing technique, for example, a method of sintering a metal powder containing an element for pinning crystal grain boundaries (for example, see Japanese Patent Application Laid-Open Publication No. 2021-088775) is disclosed.

The present disclosure has an object to provide a powder material from which a three-dimensional object having a high density and excellent shape retainability can be manufactured.

SUMMARY OF THE INVENTION

According to an embodiment, a powder material of the present disclosure includes: a first powder composed of a first alloy; and a second powder composed of a pure metal or a second alloy having a composition different from a composition of the first alloy. A difference (A-B) between a melting point (A) of the first powder and a melting point (B) of the second powder is 15°C or greater and 200°C or less. Content of the second powder is 7% by mass or greater and 30% by mass or less relative to a total amount of the powder material. (i) An area-weighted average grain size of a sintered body, obtained by sintering the powder material at a maximum temperature that is between the melting point of the first powder and the melting point of the second powder, is less than 1.80 times a volume average grain size of the first powder, and/or, (ii) the first alloy is a titanium alloy which contains at least boron (B), or an aluminum alloy which contains at least one of chromium (Cr), zirconium (Zr), scandium (Sc), or manganese (Mn).

According to an aspect of the present disclosure, it is possible to provide a powder material from which a three-dimensional object having a high density and excellent shape retainability can be manufactured.

BRIEF DESCRIPTION OF THE DRAWINGS

FIG. 1 is a graph showing the relationship between the progress of a debinding step and a sintering step in a method of manufacturing a three-dimensional object according to an embodiment of the present disclosure and the temperature of a three-dimensional object according to an embodiment of the present disclosure, where the vertical axis represents the temperature (°C) of the three-dimensional object, and the horizontal axis represents time (h).

FIG. 2A is a schematic cross-sectional view illustrating a modeling flow in a method of manufacturing a three-dimensional object according to an embodiment of the present disclosure;

FIG. 2B is a schematic cross-sectional view illustrating a modeling flow in a method of manufacturing a three-dimensional object according to an embodiment of the present disclosure;

FIG. 2C is a schematic cross-sectional view illustrating a modeling flow in a method of manufacturing a three-dimensional object according to an embodiment of the present disclosure;

FIG. 2D is a schematic cross-sectional view illustrating a modeling flow in a method of manufacturing a three-dimensional object according to an embodiment of the present disclosure;

FIG. 2E is a schematic cross-sectional view illustrating a modeling flow in a method of manufacturing a three-dimensional object according to an embodiment of the present disclosure;

FIG. 3 is a schematic view illustrating the shape of a sintered body manufactured in an Example;

FIG. 4 is a schematic view illustrating the amount of deformation of a sintered body in an Example;

FIG. 5A is a schematic view illustrating the shape of a joined object manufactured in an Example;

FIG. 5B is a schematic view of a joined object manufactured in an Example, cut at a center part thereof and viewed

perpendicularly from a side;
FIG. 6A is a tomogram of a joining interface at a position 90 in an intermediate layer 80 in an Example; and
FIG. 6B is a tomogram of a joining interface at a position 90 in an intermediate layer 80 in a Comparative Example.

DETAILED DESCRIPTION OF THE DISCLOSURE

In the method for manufacturing a high-temperature component described in Japanese Patent Application Laid-Open Publication No. 2021-088775, there is a problem that the pinning effect disappears when the heat treatment temperature is high, resulting in crystal grain coarsening and shape retainability deterioration of the high-temperature component. This is specifically explained as follows. In the method for manufacturing a high-temperature component described in Japanese Patent Application Laid-Open Publication No. 2021-088775, a powder compact is sintered at a high temperature in order to densify the high-temperature component. Generally, crystal grains tend to coarsen when heated, whereas it is possible to inhibit migration of the crystal grain boundaries by adding an additive having a pinning effect to the powder compact. However, when sintered at a high temperature, the crystal grain boundaries cannot be pinned sufficiently, resulting in crystal grain coarsening. When the crystal grains coarsen, the specific surface area of the crystal grains decreases, and the relative film thickness of a film of a liquid phase increases. This spaces the crystal grains apart from each other, to make the high-temperature component easily deformable. The term "pinning" refers to a phenomenon inhibiting migration of crystal grain boundaries.

The powder material of the present embodiment can sufficiently solve various concerns in the related art. More specifically, it is possible to provide a powder material from which a three-dimensional object having a high density and excellent shape retainability can be manufactured.

The present disclosure will be described in detail below. It should be noted that the present disclosure is not limited to the following embodiments, and other embodiments, additions, modifications, deletions, and the like are applicable within the conceivable scope of persons skilled in the art and are included in the scope of the present disclosure as long as the workings and effects of the present disclosure are achieved.

The term "sintered body" in one embodiment of the present disclosure is synonymous with "three-dimensional object".

(Powder Material)

A powder material according to a first embodiment of the present disclosure is a powder material containing a first powder composed of a first alloy and a second powder composed of a pure metal or a second alloy having a composition different from the composition of the first alloy, wherein a difference (A-B) between the melting point (A) of the first powder and the melting point (B) of the second powder is 15°C or greater and 200°C or less, the content of the second powder is 7% by mass or greater and 30% by mass or less relative to the total amount of the powder material, and the area-weighted average grain size of a sintered body obtained by sintering the powder material at a maximum temperature that is between the melting point of the first powder and the melting point of the second powder is less than 1.80 times the volume average grain size of the first powder.

A powder material according to a second embodiment of the present disclosure is a powder material containing a first powder composed of a first alloy and a second powder composed of a pure metal or a second alloy having a composition different from the composition of the first alloy, wherein the difference (A-B) between the melting point (A) of the first powder and the melting point (B) of the second powder is 15°C or greater and 200°C or less, the content of the second powder is 7% by mass or greater and 30% by mass or less relative to the total amount of the powder material, and the first alloy is a titanium alloy which contains at least boron (B), or an aluminum alloy which contains at least one of chromium (Cr), zirconium (Zr), scandium (Sc), or manganese (Mn).

In the present specification, the powder material according to the first embodiment and the powder material according to the second embodiment may be collectively referred to as "powder material".

According to the powder material of the present embodiment, it is possible to set the sintering temperature of a sintering precursor of the powder material to a temperature between the melting point of the first powder and the melting point of the second powder, by adjusting the difference between the melting point of the first powder and the melting point of the second powder to 15°C or greater and 200°C or less. That is, during sintering, it is possible to melt only the second powder, and to sufficiently densify a sintered body (three-dimensional object). In addition, it is possible to inhibit coarsening of crystal grains, without loss of the effect of a pinning effect additive (second-phase particles) contained in the first powder. Furthermore, along with the inhibited coarsening of the crystal grains, it is possible to inhibit an increase in the film thickness of a film of a liquid phase surrounding the crystal grains, and to provide excellent shape retainability to the sintered body (three-dimensional object). In addition, because the wettability of the surface of the first powder is improved by the pinning effect additive, the gaps between the particles of the first powder are fully soaked with the melt of the second powder forming the liquid phase, thereby further promoting densification.

The first powder and/or the second powder in the present disclosure may be coated with a resin. Examples of the resin include a polyvinyl alcohol resin, an amide resin, an imide resin, an acrylic resin, and the like.

<First Powder>

The first powder contains a first alloy. The term "alloy" as used herein means a metal-like substance containing a plurality of elements.

The first alloy is not particularly limited and can be appropriately selected according to the purpose. Examples of the first alloy include alloys composed of two or more elements selected from the group consisting of aluminum (Al), tungsten (W), titanium (Ti), molybdenum (Mo), niobium (Nb), silicon (Si), copper (Cu), tin (Sn), magnesium (Mg), iron (Fe), nickel (Ni), zinc (Zn), chromium (Cr), zirconium (Zr), scandium (Sc), and manganese (Mn).

The first alloy in the powder material as the first embodiment is preferably an alloy containing aluminum, an alloy containing titanium, and an alloy containing iron, and more preferably an alloy containing aluminum, from the viewpoint of obtaining a three-dimensional object having a high density and excellent shape retainability. An alloy containing aluminum is more preferable.

The alloy containing aluminum is preferably an aluminum alloy. It is preferable that the aluminum alloy contains at least any one of chromium (Cr), zirconium (Zr), scandium (Sc), or manganese (Mn). With such an alloy composition, a three-dimensional object having a high density and excellent shape retainability can be obtained.

The alloy containing titanium is preferably a titanium alloy. It is preferable that the titanium alloy contains at least boron (B). With such an alloy composition, a three-dimensional object having a high density and excellent shape retainability can be obtained.

The alloy containing iron is preferably steel. It is preferable that the steel contains at least any one of titanium (Ti), niobium (Nb), or aluminum (Al). With such an alloy composition, a three-dimensional object having a high density and excellent shape retainability can be obtained.

The first alloy in the powder material according to a second embodiment is an aluminum alloy or a titanium alloy. Of these, an aluminum alloy is preferable from the viewpoint of improving the thermal conductivity of the final part and reducing the weight of the final part.

The aluminum alloy of the first powder in the powder material according to the second embodiment contains at least any one of chromium (Cr), zirconium (Zr), scandium (Sc), or manganese (Mn).

The titanium alloy of the first powder in the powder material of the second embodiment contains at least boron (B).

In the present specification, "aluminum alloy" and "alloy containing aluminum" have different meanings. The term "aluminum alloy" refers to an alloy in which a metal constituting a main component (exceeding 50% by mass of the total amount) of the alloy is aluminum. The term "alloy containing aluminum" refers to an alloy in which aluminum is contained, and the content of aluminum is not particularly limited. In the present specification, the same applies to other types of alloys.

Specific examples of the alloy containing aluminum and the aluminum alloy include an Al-Cu-based alloy, an Al-Mn-based alloy, an Al-Mg-based alloy, an Al-Si-based alloy, an Al-Si-Mg-based alloy, an Al-Si-Cu-based alloy, an Al-Zn-Mg-based alloy, an Al-Li-based alloy, or alloy materials similar thereto.

When the first alloy is an aluminum alloy, the content of aluminum is not particularly limited and can be appropriately selected according to the purpose, yet is preferably 96% by mass or greater and less than 100% by mass, and more preferably 97% by mass or greater and 99% by mass or less relative to the total mass of the aluminum alloy.

When the content of aluminum is 96% by mass or greater and less than 100% by mass relative to the total mass of the aluminum alloy, the shape retainability of the sintered body (three-dimensional object) can be enhanced, as compared with an alloy containing a large amount of a metal other than aluminum.

When the first alloy is an aluminum alloy, the content of the metal other than aluminum is not particularly limited and can be suitably selected according to the purpose, yet is preferably greater than 0% by mass and 4% by mass or less, and more preferably 1% by mass or greater and 3% by mass or less. When the content of the metal other than aluminum is greater than 0% by mass and 4% by mass or less relative to the total mass of the aluminum alloy, the shape retainability of a sintered body (three-dimensional object) can be enhanced.

From the viewpoint of obtaining a sintered body (three-dimensional object) having a high density and excellent shape retainability, it is preferable that the first alloy contains three or more types of metals.

Specific examples of the first alloy include AlCr0.2, AlSi6Cr0.2, AlZr0.2, AlMn0.2, AlSc0.2, AlCr0.2Zr0.2, AlZr0.2Sc0.2, AlCr0.1, AlCr2, AlMglCr0.2Zr0.2, TiAl6V4B0.4, AlSil.2Cr0.2, AlSi9Cr0.2, AlMg0.2, AlSi12, and the like

The denotation of an alloy composition in the present specification will be described, using "AlCr0.2" as an example. "AlCr0.2" indicates that Cr accounts for 0.2% by mass of the total mass of the AlCr0.2 alloy, and specifically indicates an alloy composed of 99.8% by mass of Al and 0.2% by mass of Cr. In the present specification, the same applies to other types of alloys.

The volume average particle size of the first powder is not particularly limited and can be suitably selected according to the purpose, yet is preferably 10 μm or greater and 100 μm or less, more preferably 25 μm or greater and 80

μm or less, even more preferably 35 μm or greater and 70 μm or less, and particularly preferably 45 μm or greater and 60 μm or less.

When the volume average grain size of the first powder is 10 μm or greater, there is an advantage that the fluidity of the first powder is improved, which facilitates improvement of the relative density of a sintering precursor. When the volume average grain size of the first powder is 100 μm or less, there is an advantage that the layer lamination pitch can be reduced when forming a sintering precursor, leading to improvement of the dimensional accuracy of the sintered body. Furthermore, when the volume average grain size of the first powder is 80 μm or less, the number of particle contacts in the sintering precursor increases, and the relative density of the sintered body is increased.

The method for measuring the volume average grain size of the first powder is not particularly limited and can be suitably selected according to the purpose, and it is possible to measure the volume average grain size by, for example, a particle size distribution analyzer (for example, Microtrac MT3000II series, available from Microtrac Bel Corp.).

The content of the first powder is not particularly limited and can be suitably selected according to the purpose, yet is preferably 50% by mass or greater and 93% by mass or less, and more preferably 70% by mass or greater and 90% by mass or less relative to the total amount of the powder material.

As the first powder and the first alloy, suitably synthesized products or commercially available products may be used.

<Second Powder>

The second powder contains a pure metal or a second alloy having a composition different from the composition of the first alloy. The term "pure metal" as used herein means a single metal.

The pure metal is not particularly limited and can be suitably selected according to the purpose, and examples of the pure metal include aluminum (Al), tungsten (W), titanium (Ti), molybdenum (Mo), niobium (Nb), copper (Cu), tin (Sn), magnesium (Mg), iron (Fe), manganese (Mn), cobalt (Co), nickel (Ni), zinc (Zn), chromium (Cr), and the like.

The second alloy is not particularly limited and can be appropriately selected according to the purpose as long as it has a composition different from the composition of the first alloy, and examples of the second alloy include alloys composed of two or more elements selected from the group consisting of aluminum (Al), tungsten (W), titanium (Ti), molybdenum (Mo), niobium (Nb), silicon (Si), copper (Cu), tin (Sn), magnesium (Mg), iron (Fe), nickel (Ni), zinc (Zn), chromium (Cr), zirconium (Zr), scandium (Sc), and manganese (Mn).

It is preferable that the second powder is composed of the second alloy. The second alloy is preferably an aluminum alloy from the viewpoint of obtaining a three-dimensional object having a high density and excellent shape retainability.

When the second alloy is an aluminum alloy, the content of aluminum is not particularly limited and can be suitably selected according to the purpose, yet is preferably 65% by mass or greater and 95% by mass or less, and more preferably 80% by mass or greater and 90% by mass or less relative to the total amount of the aluminum alloy.

When the content of aluminum is 65% by mass or greater and 95% by mass or less relative to the total amount of the aluminum alloy, the second powder is completely melted at a lower temperature, making it possible to densify the sintered body (three-dimensional object).

When the second alloy is an aluminum alloy, the content of a metal other than aluminum is not particularly limited and can be suitably selected according to the purpose, yet is preferably 5% by mass or greater and 35% by mass or less, and more preferably 10% by mass or greater and 20% by mass or less. When the content of a metal other than aluminum is 5% by mass or greater and 35% by mass or less relative to the total mass of the aluminum alloy, the sintered body (three-dimensional object) can be densified.

The volume average grain size of the first powder is preferably equal to or greater than the volume average grain size of the second powder, and more preferably greater than the volume average grain size of the second powder. When the volume average grain size of the first powder is greater than the volume average grain size of the second powder, the second powder is deployed between the first powder particles, and when the powder material is sintered, it becomes a sintered body having a high relative density. In addition, due to the second powder, from which a liquid phase is produced, being uniformly deployed, the relative density of the sintered body and the dimensional accuracy of the sintered body are improved.

The ratio of the volume average grain size of the first powder to the volume average grain size of the second powder [volume average grain size of the first powder: volume average grain size of the second powder] is not particularly limited and can be suitably selected according to the purpose, yet is preferably 1:0.1 to 1:1 and more preferably 1:0.1 to 1:0.7. When the ratio [volume average grain size of the first powder: volume average grain size of the second powder] is 1:0.1 to 1:0.7, the second powder is deployed between the first powder particles, and when the powder material is sintered, it becomes a sintered body having an even higher relative density. Further, due to the second powder, from which a liquid phase is produced, being uniformly deployed, the relative density of the sintered body and the dimensional accuracy of the sintered body are further improved.

A specific volume average grain size of the second powder is not particularly limited and can be suitably selected according to the purpose, yet is preferably 3 μm or greater and 80 μm or less, more preferably 5 μm or greater and 60 μm or less, and even more preferably 10 μm or greater and 40 μm or less.

When the volume average grain size of the second powder is 3 μm or greater, there is an advantage that the fluidity of the second powder during recoating is improved, which facilitates improvement of the relative density of the sintering precursor. Further, when the volume average grain size of the second powder is 80 μm or less, there is an advantage that the sintering precursor can be formed at a narrow layer lamination pitch, which improves the dimensional accuracy of the sintered body. Further, when the volume average grain size of the second powder is 80 μm or less, the number of particle contacts in the sintering precursor increases, and the relative density of the sintered body is increased.

The method for measuring the volume average grain size of the second powder is not particularly limited, and can be appropriately selected according to the purpose, and the volume average grain size of the second powder can be measured by, for example, a particle size distribution analyzer (for example, Microtrac MT3000II series, available from Microtrac Bel Corp.).

In the powder material of the present embodiment, the content of the second powder is 7% by mass or greater and 30% by mass or less relative to the total amount of the powder material.

When the content of the second powder is 7% by mass or greater relative to the total amount of the powder material, a three-dimensional object having a high density can be obtained. When the content of the second powder is 30% by mass or less relative to the total amount of the powder material, a three-dimensional object having excellent shape retainability can be obtained.

From the viewpoint of improving the density and shape retainability of the three-dimensional object, the content of the second powder is preferably 8% by mass or greater and 25% by mass or less, and more preferably 10% by mass or greater and 20% by mass or less relative to the total amount of the powder material.

[Melting Point Difference]

In the powder material of the present embodiment, the difference (A-B) between the melting point (A) of the first powder and the melting point (B) of the second powder is 15°C or greater and 200°C or less.

When the difference (A-B) between the melting point (A) of the first powder and the melting point (B) of the second powder is 15°C or greater, a three-dimensional object having shape retainability can be obtained. When the difference (A-B) between the melting point (A) of the first powder and the melting point (B) of the second powder is 200°C or less, a three-dimensional object having a high density can be obtained.

The difference (A-B) between the melting point (A) of the first powder and the melting point (B) of the second powder is preferably 30°C or greater and 180°C or less, and more preferably 70°C or greater and 120°C or less, from the viewpoint of achieving both the density and the shape retainability of the three-dimensional object.

The method for measuring the melting point of the first powder and the melting point of the second powder is not particularly limited, and can be appropriately selected according to the purpose, and the melting points can be measured by, for example, thermogravimetric differential thermal analysis TG-DTA(STA7200RV, available from Hitachi High-Tech Science Corporation).

[Area-Weighted Average Grain Size of Sintered body]

In the powder material according to the first embodiment of the present disclosure, the area-weighted average grain diameter of the sintered body obtained by sintering the powder material at a maximum temperature that is between the melting point of the first powder and the melting point of the second powder is less than 1.80 times the volume average grain diameter of the first powder. Here, the area-weighted average grain diameter of the sintered body being less than 1.80 times the volume average grain diameter of the first powder indicates that migration of crystal grain boundaries during sintering has been inhibited. For example, when the initial volume average grain size of the first powder is 55 μm and the area-weighted average grain size of the sintered body has grown to 99 μm or greater, it can be determined that the crystal grains have coarsened (migration of the crystal grain boundaries has not been inhibited). On the other hand, when the area-weighted average grain size of the sintered body is less than 99 μm, it can be determined that migration of the crystal grain boundaries has been inhibited and coarsening of the crystal grains has been inhibited.

The area-weighted average grain size of the sintered body obtained by sintering the powder material is preferably less than 1.50 times, more preferably less than 1.10 times, and even more preferably less than 1.00 times the volume average grain size of the first powder.

When the area-weighted average grain size of the sintered body obtained by sintering the powder material is less than 1.80 times the volume average grain size of the first powder, it is possible to obtain a three-dimensional object having excellent shape retainability.

The area-weighted average grain size of the sintered body is preferably 10 μm or greater and 90 μm or less, more

preferably 20 μm or greater and 80 μm or less, and even more preferably 30 μm or greater and 70 μm or less. When the area-weighted average grain size of the sintered body is 10 μm or greater and 90 μm or less, it is possible to obtain a three-dimensional object having excellent shape retainability.

The method for measuring the area-weighted average grain size of a sintered body obtained by sintering the powder material is not particularly limited, and can be appropriately selected according to the purpose. For example, the area-weighted average grain size can be measured by the following method. A cross-section of the sintered body is prepared by using a cooling cross-section polisher (IB-19520CCP, available from JEOL). The cross-section is analyzed by an EBSD method, using a scanning electron microscope (NVision40, available from Carl Zeiss AG) equipped with an EBSD detector (Hikari Super, available from TSL Solutions KK). In this way, the area-weighted average grain size is measured.

<Other Components>

The powder material of the present embodiment may contain other components as required. Other components of the powder material are not particularly limited and may be suitably selected according to the purpose as long as the effect of the present disclosure is not impaired. Examples of other components include additives, such as a deterioration inhibitor, a fluidizing agent, a strengthening agent, a flame retardant, a plasticizer, a heat-stable additive, a nucleating agent, and the like, polymer particles, and the like. Examples of the polymer particles include polymer particles of an amorphous resin and the like. One of these may be used alone, or two or more of these may be used in combination.

The contents of the other components in the powder material are not particularly limited and may be suitably selected according to the purpose as long as the effect of the present disclosure is not impaired.

(Method of Manufacturing Three-Dimensional Object and Three-Dimensional Object Manufacturing Apparatus)

A method of manufacturing a three-dimensional object according to the present embodiment includes a powder layer forming step, a liquid modeling agent applying step, a sintering precursor forming step, and a sintering step, and may include other steps as necessary. A three-dimensional object manufacturing apparatus according to the present embodiment includes a powder layer forming unit, a liquid modeling agent applying unit, a sintering precursor forming unit, and a sintering unit, and may include other units as necessary.

The method of manufacturing a three-dimensional object according to the present embodiment can be suitably implemented by the three-dimensional object manufacturing apparatus according to the present embodiment.

<Powder Layer Forming Step and Powder Layer Forming Unit>

The powder layer forming step is a step of forming a powder layer by supplying a powder material containing a first powder composed of a first alloy and a second powder composed of a pure metal or a second alloy having a composition different from the composition of the first alloy.

The powder layer forming unit is a unit for forming a powder layer by supplying a powder material containing a first powder composed of a first alloy and a second powder composed of a pure metal or a second alloy having a composition different from the composition of the first alloy.

The powder layer forming step can be suitably performed by the powder layer forming unit.

The powder material used in the powder layer forming step and in the powder layer forming unit is the same as that described in the above item (Powder Material), and therefore redundant description thereof is omitted.

In the powder layer forming step, it is preferable that a powder layer is formed on a support by the powder layer forming unit. As the powder layer forming unit, a powder layer forming unit provided in a publicly known three-dimensional object manufacturing apparatus can be used.

The support is not particularly limited and can be suitably selected according to the purpose as long as the powder material can be placed on the support. Examples of the support include a table having a surface on which the powder material is placed, a base plate, or the like.

The method for placing the powder material on the support is not particularly limited and can be suitably selected according to the purpose. Suitable examples of, for example, a method for placing the powder material in the form of a thin layer include: a method using a publicly known counter rotating mechanism (counter roller) and the like; a method of spreading the powder material in a thin layer using a member, such as a brush, a roller, a blade, and the like; a method of spreading the powder material in a thin layer by pressing the surface of the powder material using a pressing member; a method using a publicly known powder additive manufacturing apparatus; and the like.

<Liquid Modeling Agent Applying Step and Liquid Modeling Agent Applying Unit>

The liquid modeling agent applying step is a step of applying a liquid modeling agent to the powder layer.
The liquid modeling agent applying unit is a unit for applying the liquid modeling agent to the powder layer.
The liquid modeling agent applying step can be suitably performed by the liquid modeling agent applying unit.
In the liquid modeling agent applying step, the liquid modeling agent is applied to the powder layer, to solidify the powder layer and form a sintering precursor amounting to one layer.

-Liquid Modeling Agent-

The liquid modeling agent is used as a binder for when sintering the powder material. The liquid modeling agent is not particularly limited and can be selected appropriately according to the purpose. Yet, it is preferable that the liquid modeling agent contains a resin and a solvent.

--Resin--

The resin is not particularly limited and can be selected appropriately from publicly known resins that can be used for sintering. Examples of the resin include: vinyl-based resins, such as polyvinyl acetate resin, partially saponified polyvinyl acetate resin, polyvinyl butyral resin, and the like; and the like. One of these resins may be used alone or two or more resins may be used in combination.
The content of the resin is not particularly limited and can be suitably selected according to the purpose, yet is preferably 5.0% by mass or greater and 30.0% by mass or less, and more preferably 10.0% by mass or greater and 20.0% by mass or less relative to the total mass of the liquid modeling agent.
When the content of the resin is 5.0% by mass or greater and 30.0% by mass or less relative to the total mass of the liquid modeling agent, the viscosity of the liquid modeling agent can be set to a viscosity suitable for discharging by an inkjet method.

--Solvent--

The solvent is not particularly limited and can be suitably selected according to the purpose, and publicly known solvents may be used. Examples of solvents include n-octane, m-xylene, solvent naphtha, diisobutyl ketone, 3-heptanone, 2-octanone, acetylacetone, butyl acetate, amyl acetate, n-hexyl acetate, n-octyl acetate, ethyl butyrate, ethyl valerate, ethyl caprylate, ethyl octanoate, ethyl acetoacetate, ethyl 3-ethoxypropionate, diethyl oxalate, diethyl malonate, diethyl succinate, diethyl adipate, bis 2-ethylhexyl maleate, triacetin, tributyrin, propylene glycol monomethyl ether acetate, ethylene glycol monobutyl ether acetate, dibutyl ether, 1,2-dimethoxybenzene, 1,4-dimethoxybenzene, diethylene glycol monobutyl ether, diethylene glycol dimethyl ether, triethylene glycol dimethyl ether, 2-methoxy-1-methyl ethyl acetate, $\gamma$-butyrolactone, propylene carbonate, cyclohexanone, butyl cellosolve, and the like.
One of these may be used alone, or two or more may be used in combination.
The content of the solvent is not particularly limited and can be appropriately selected according to the purpose, yet is preferably 60.0% by mass or greater and 95.0% by mass or less, and more preferably 70.0% by mass or greater and 95.0% by mass or less relative to the total amount of the liquid modeling agent.
When the content of the solvent is 60.0% by mass or greater and 95.0% by mass or less, the solubility of the resin is improved, and consequently the viscosity of the liquid modeling agent can be reduced, making it possible to discharge the liquid modeling agent appropriately by, for example, an inkjet method.

--Other Components--

The liquid modeling agent may contain other components, if necessary. Other components of the liquid modeling agent are not particularly limited, and can be appropriately selected according to the purpose, and examples of other components include a surfactant, an anti-drying agent, a viscosity modifier, a permeation agent, a defoaming agent, a pH modifier, an antiseptic, an antifungal agent, a colorant (a pigment, a paint, and the like), a preservative, a stabilizer, and the like. One of these may be used alone, or two or more may be used in combination. As the other components of the liquid modeling agent, conventionally known materials may be used.
The method for applying the liquid modeling agent to the powder layer is not particularly limited and can be appropriately selected according to the purpose, and examples of the method include a dispenser method, a spray method, an inkjet method, and the like. In order to implement these methods, a publicly known apparatus can be suitably used as the liquid modeling agent applying unit.
The inkjet method is preferable as the method for applying the liquid modeling agent to the powder layer. The

inkjet method is preferable in that it has a better uniformity of a liquid droplet amount compared with the spray method, can coat a wider area compared with the dispenser method, and can form a complex three-dimensional shape with high accuracy and efficiency.

When the inkjet method is used as the method for applying the liquid modeling agent to the powder layer, examples of the liquid modeling agent applying unit include an inkjet nozzle that can apply the liquid modeling agent to the powder layer, an inkjet printer having the inkjet nozzle, and the like.

<Sintering Precursor Forming Step and Sintering Precursor Forming Unit>

The sintering precursor forming step is a step of forming a sintering precursor by repeating the powder layer forming step and the liquid modeling agent applying step.

The sintering precursor forming unit is a unit for forming a sintering precursor.

The sintering precursor forming step can be suitably performed by the sintering precursor forming unit.

By repeating the powder layer forming step and the liquid modeling agent applying step, powder layers are laminated and a sintering precursor can be obtained. Placing the powder material in the form of a thin layer can also be performed automatically and simply by using a publicly known powder additive manufacturing apparatus.

The powder additive manufacturing apparatus generally includes a powder layer forming unit and a liquid modeling agent applying unit. The powder layer forming unit and the liquid modeling agent applying unit are the same as those described in the items <Powder Layer Forming Step and Powder Layer Forming Unit> and <Liquid Modeling Agent Applying Step and Liquid Modeling Agent Applying Unit> above, and therefore redundant descriptions thereof are omitted. By alternately repeating the powder layer forming step and the liquid modeling agent applying step a predetermined number of times, solidified powder layers can be laminated, and a desired sintering precursor can be formed.

<Sintering Step and Sintering Unit>

The sintering step is a step of sintering the sintering precursor.

The sintering unit is a unit for sintering the sintering precursor.

The sintering step can be suitably performed by the sintering unit.

In the sintering step, the sintering unit can obtain an integrated metal sintered body having an improved density, from the sintering precursor formed in the sintering precursor forming step.

Examples of the sintering unit include a publicly known sintering furnace.

The maximum sintering temperature in the sintering step is preferably a temperature between the melting point of the first powder and the melting point of the second powder from the viewpoint that it is possible to densify the sintered body (three-dimensional object) by melting only the second powder.

When the first alloy is an alloy containing aluminum, the sintering temperature is preferably less than 660°C.

The sintering time in the sintering step can be appropriately set according to the shape and size of the sintering precursor. As the sintering time, it is preferable to raise the temperature to the target temperature and then keep the temperature for 1 hour or longer and 10 hours or shorter. The sintering precursor can be sufficiently sintered by setting the sintering time to 1 hour or longer and 10 hours or shorter.

The atmosphere condition under which the sintering step is performed is not particularly limited and can be suitably selected according to the purpose, yet it is preferable to perform the sintering step under the atmosphere condition, such as vacuum, argon (Ar), hydrogen ($H_2$), nitrogen ($N_2$), and the like.

<Other Steps and Other Units>

Examples of the other steps include a debinding step, an excess powder removing step, a joining step, and the like.

Examples of the other unit include a debinding step, an excess powder removing step, a joining step, and the like.

<<Debinding step and Debinding unit>>

The debinding step is a step of debinding the resin in the sintering precursor.

The debinding unit is a unit for debinding the resin in the sintering precursor.

The debinding step can be suitably performed by the debinding unit.

The debinding step is provided between the sintering precursor forming step and the sintering step. In the debinding step, the resin component in the sintering precursor is debinded. Examples of the debinding method include a method of heating the resin component of the sintering precursor at a temperature equal to or higher than the thermal decomposition temperature, a method of extracting the resin by immersing the sintering precursor in a solvent, and the like.

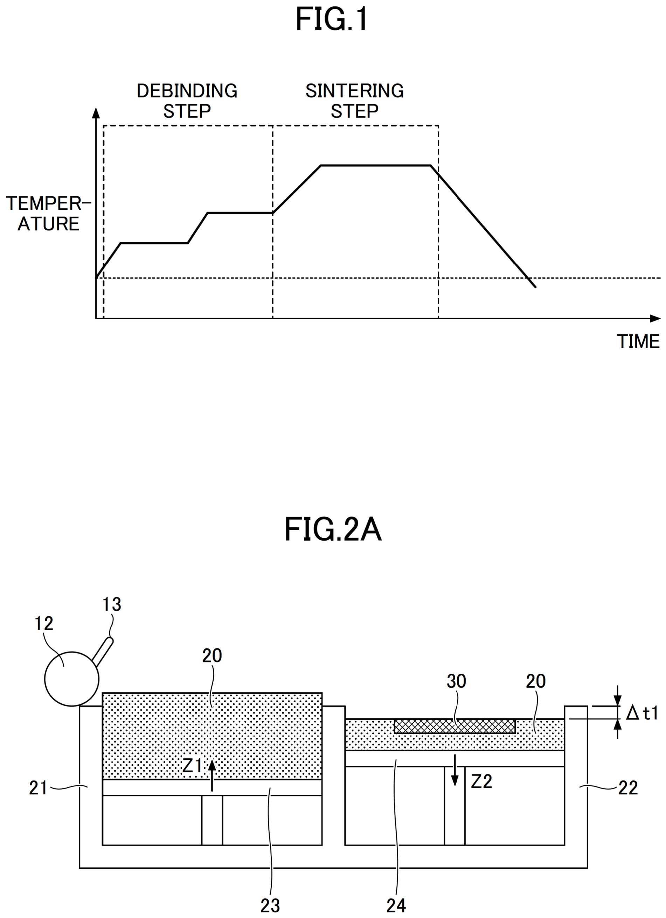

More specifically, for example, the resin component contained in the liquid modeling agent is decomposed at a temperature higher than the thermal decomposition temperature of the resin component and lower than the melting point or the solidus temperature of the first powder (FIG. 1). Depending on the resin component used, it is possible to set a plurality of heating and retention temperatures. Instead of heating, it is also possible to apply a debinding method by solvent extraction, which extracts the resin by immersing the sintering precursor in a solvent.

As the sintering step after the debinding step, the sintering precursor after being debinded is heated at 1°C/h to 200°C/h to a predetermined temperature (the heating rate can be changed during the step), and then retained at the temperature for approximately 1 to 10 hours (FIG. 1). These steps can be performed in a vacuum, Ar, $H_2$ or $N_2$ atmosphere, and the like.

In the debinding of the resin component, the resin component does not need to be completely debinded. That is, the residual amount of the resin component in the sintering precursor may be greater than 0% by mass. Yet, it is preferable that the residual amount of the resin component in the sintering precursor is as close to 0% by mass as possible because the density of the sintered body after sintering is better improved.

The debinding unit includes, for example, a publicly known debinding furnace.

The debinding step and the sintering step may be performed continuously using the same sintering furnace (debinding furnace), or may be performed separately using different sintering furnaces (debinding furnaces).

<<Excess Powder Removing Step and Excess Powder Removing Unit>>

The excess powder removing step is a step of removing excess powder, which is powder to which no liquid modeling agent has been applied, from the sintering precursor.

The excess powder removing unit is a unit for removing excess powder, which is powder to which no liquid modeling agent has been applied, from the sintering precursor.

The excess powder removing step can be suitably performed by the excess powder removing unit.

The excess powder removing step is provided between the sintering precursor forming step and the sintering step. When the method of manufacturing a three-dimensional object includes the debinding step, it is preferable to perform the excess powder removing step before the debinding step. It is preferable that the excess powder removing step includes at least one step selected from, for example, a step of removing excess powder by air blowing and a step of removing excess powder by immersing the sintering precursor in a removing liquid, and more preferably, both of these steps.

A step of joining the manufactured sintered body with another object may also be appropriately added. By employing the joining step, for example, it is possible to manufacture a part having a size and shape that are difficult to manufacture by sintering.

<<Joining Step and Joining Unit>>

The joining step is a step of joining the sintered body and an object with each other.

The joining unit is a unit for joining the sintered body and an object with each other.

Joining the sintered body and an object with each other means joining two joining-target members with each other, where one joining-target member is the sintered body and the other joining-target member is the object. In this specification, the joining-target members mean members to be joined, and here, the sintered body and the object correspond to the joining-target members.

The object constitutes a joining-target member different from the sintered body constituting one joining-target member, but the object may be a sintered body obtained in the same manner as that of the sintered body constituting the one joining-target member. The object is, for example, a rolled object, a cast object, a forged object, an extruded object, and the like. The rolled object does not encompass a sintered body, and refers to a cast object obtained by melting a powder, which is then processed by rolling and the like. The material of the object is preferably metal from the viewpoint of the joining quality, and more preferably an aluminum alloy.

In the joining step, it is preferable to heat the sintered body in a temperature range in which a liquid phase occurs in the sintered body. The temperature range in which a liquid phase occurs in the sintered body depends on the metal element contained in the sintered body. For example, in the case of a sintered body containing an aluminum alloy, the temperature range in which to heat the sintered body is 300°C or higher and 2,500°C or lower, preferably 400°C or higher and 2,000°C or lower, more preferably 500°C or higher and 1,000°C or lower, and still more preferably 550°C or higher and 700°C or lower.

In the joining step, it is preferable to heat the sintered body containing an alloy in a temperature range in which a liquid phase occurs in the sintered body by 1% by mass or greater and less than 50% by mass. By heating the sintered body containing an alloy in a temperature range in which a liquid phase occurs in the sintered body by 1% by mass or greater, it is possible to manufacture a joined object having a good joining quality. In addition, by heating the sintered body containing an alloy in a temperature range in which a liquid phase occurs in the sintered body by less than 50% by mass, it is possible to maintain the shape of the sintered body without excessive change into the liquid phase.

In the joining step, the time required for joining (hereinafter, referred to as a joining time) may be desirably selected, yet it is preferable that the joining time is a time that causes the liquid phase to occur for 1 minute or longer. When the joining time is a time that causes the liquid phase to occur from an eutectic part for 1 minute or longer, it is possible to fill the boundary surface sufficiently with the liquid phase.

In the joining step, the joining environment may be desirably selected. In the joining step, it is preferable to join the members in a vacuum, nitrogen, a noble gas atmosphere, such as argon and the like, and a reducing atmosphere, such as hydrogen. In the joining step, when the sintered body and the object are joined and completely cooled, the method of manufacturing a joined object is completed.

In the joining step, a liquid phase occurs mainly from crystal grain boundaries, and the liquid phase is supplied to a rolled object, which is a joining-target member, via the crystal grain boundaries. Since the area-weighted average grain size of the sintered body of the present disclosure is less than 1.80 times the volume average grain size of the first powder, the gap between the crystal grain boundaries is narrow. Therefore, the liquid phase is supplied thoroughly to the rolled object, and a good joined surface having a low voidage can be obtained.

Hereinafter, an embodiment of the method of manufacturing a three-dimensional object of the present disclosure will be described in detail with reference to the drawings. In the drawings, the same reference numerals are given to the same components, and redundant descriptions thereof may be omitted. Further, the number, location, shape, and the like of the following components are not limited to the present embodiment, and may be any preferable number, location, shape, and the like for carrying out the present disclosure.

FIGS. 2A to 2E are schematic cross-sectional views showing a modeling flow in the method of manufacturing a three-dimensional object according to an embodiment of the present disclosure.

Description will be made, starting from a state in which a first object forming layer 30 has been formed on an object forming stage 24 of an object forming tank 22. When forming the next object forming layer 30 on this object forming layer 30, as shown in FIG. 2A, a supply stage 23 of a supply tank 21 is raised upward in the Z1 direction, and the object forming stage 24 of the object forming tank 22 is lowered downward in the Z2 direction. Here, the lowering distance of the object forming stage 24 is set such that the interval between the upper surface of the object forming tank 22 (powder layer surface) and a lower part (lower tangential part) of a flattening roller 12 becomes $\Delta t1$. This interval $\Delta t1$ corresponds to the thickness of the powder layer 31 to be formed next.

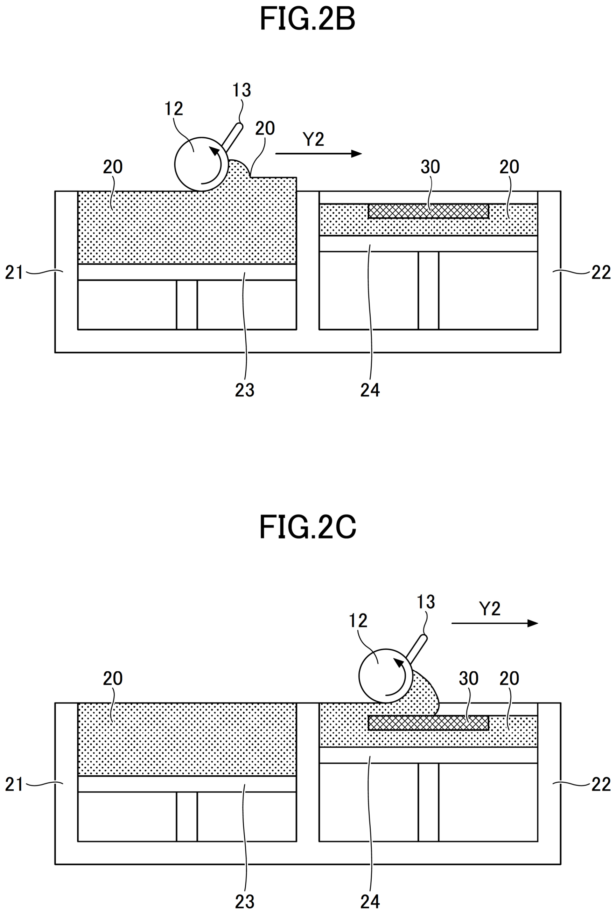

Then, as shown in FIG. 2B, a powder material 20 in the supply tank 21 is moved in the Y2 direction (toward the object forming tank 22) while rotating the flattening roller 12 in the forward direction (arrow direction in FIG. 2B), thereby transferring and supplying the powder material 20 to the object forming tank 22.

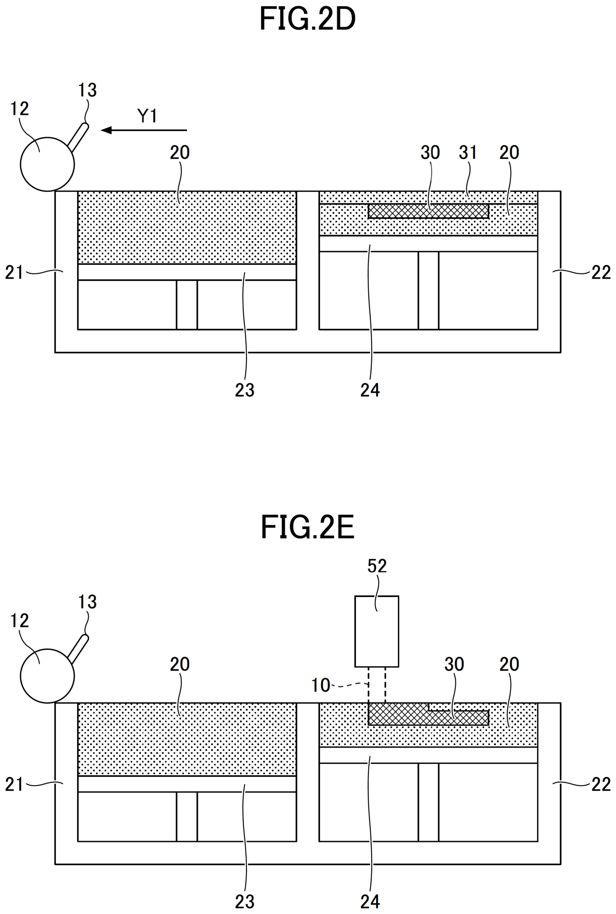

Further, as shown in FIG. 2C, the flattening roller 12 is moved in parallel with the stage surface of the object forming stage 24 of the object forming tank 22 to form a powder layer 31 on the object forming stage 24 as shown in FIG. 2D. After the formation of the powder layer 31, the flattening roller 12 is returned to the initial position.

Thereafter, as shown in FIG. 2E, liquid droplets of a liquid modeling agent 10 are discharged from a liquid discharging head 52 to additively form an object forming layer 30.

Next, the above-described powder layer forming step of forming a powder layer 31 and the liquid modeling agent applying step by the liquid discharging head 52 are repeated to form a new object forming layer 30. Here, the new object forming layer 30 and the underlying object forming layer 30 are integrated to form a part of a three-dimensionally-shaped object.

## Examples

The present disclosure will be specifically described below with reference to Examples and Comparative Examples, but the present disclosure is not limited to these Examples. In the following Examples and Comparative Examples, unless otherwise specified, "part" means "part by mass" and "%" means "% by mass".

### (Example 1)

#### <Preparation of Powder Materials>

The following first powder and second powder were used.

- First powder: AlCr0.2 powder (obtained from Toyo Aluminum K.K.)
- Second powder: AlSi12 powder (obtained from Toyo Aluminum K.K.)

The first powder and second powder were fed into a bead mill (DYNO-MILL, obtained from Shinmaru Enterprises Corporation) such that the content of the second powder would be 10% by mass relative to the total amount of the powder material, and the bead mill was operated at 100 rpm for 5 minutes to prepare the powder material.

<Preparation of Liquid Modeling Agent>

A partially saponified polyvinyl acetate resin (JMR-10LL, obtained from JAPAN VAM & POVAL CO., LTD.) (88% by mass, indicating the total amount, not the solid resin content) serving as a binder was mixed with triethylene glycol dimethyl ether (12% by mass) serving as a solvent, and dissolved by being stirred for 2 hours using a magnetic stirrer while being warmed at 80°C. After stirring, the resulting product was passed through a 1 μm filter to prepare a liquid modeling agent.

<Manufacture of Sintering Precursors>

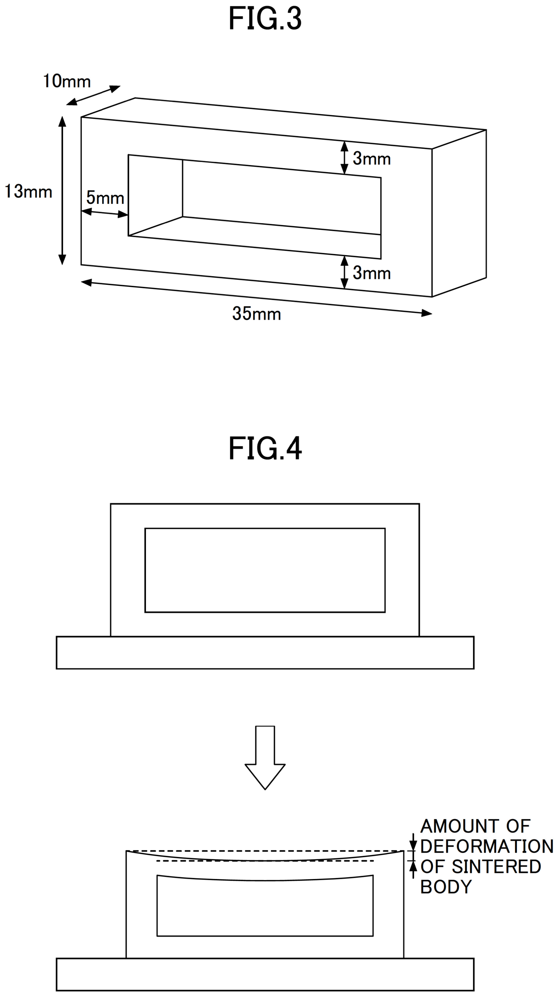

The powder material was deposited to a predetermined lamination thickness (also referred to as "lamination pitch") by recoating, to form a powder layer (powder layer forming step). Next, the prepared liquid modeling agent was dropped onto an object forming region, using a liquid discharging head (liquid modeling agent applying step). The powder layer forming step and the liquid modeling agent applying step were repeated to manufacture a sintering precursor having a hollow rectangular shape as shown in FIG. 3, and a sintering precursor having a rectangular parallelepiped shape having a size of 50 mm×50 mm×10 mm.

<Manufacture of Sintered Bodies>

While being kept embedded in uncured excess mixture powder (hereinafter, may be referred to as "excess powder"), the sintering precursors were placed in a vacuum dryer (DP610P obtained from Yamato Science Co., Ltd.), and were dried in a reduced pressure atmosphere (at a gauge pressure; -0.1 MPa) at 100°C. The sintering precursors after being dried were blasted with air to remove any adherent excess powder. The sintering precursors from which the excess powder had been removed were put in a small-sized vacuum sintering furnace (obtained from DOWA Thermotech Co., Ltd.) and retained at a temperature equal to higher than the temperature at which the binder would be thermally decomposed and lower than the melting point (577°C) of AlSi12, thereby debinding the sintering precursors. The temperature was further raised to and retained at a temperature T between the melting point of the first powder and the melting point of the second powder, that is, within the range of 577°C<T<660°C, thereby sintering the sintering precursors to form sintered bodies.

<Manufacture of Joined Object>

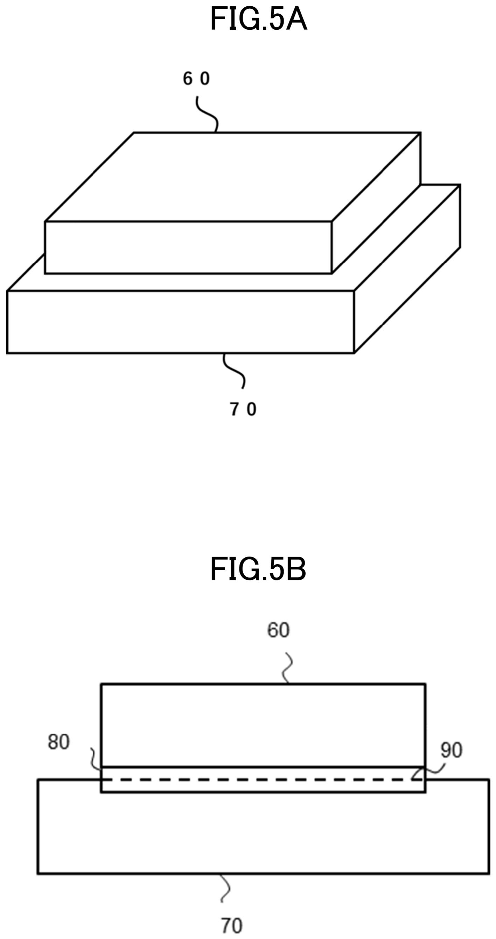

A joined object was manufactured by joining a sintered body and a rolled object. The sintering precursor having the rectangular parallelepiped shape, that was then sintered, was used as the sintered body. A 50 mm×50 mm×10 mm aluminum-free plate A6061 obtained from MISUMI was used as the rolled object. As shown in FIG. 5A, the sintered body 60 was set still on the joining-target member 70, and they were placed in a small-sized vacuum sintering furnace (obtained from Dowa Thermotech Co., Ltd.) and joined with each other with the temperature retained at 600°C to 630°C.

[Liquid Phase Occurrence Rate in Sintered body during Joining]

The ratio of a liquid phase that would occur in the sintered body during joining was calculated by thermodynamic calculation based on the alloy composition. Specifically, the liquid phase occurrence rate was estimated by inputting the alloy composition of the sintered body and the joining temperature into thermodynamic equilibrium calculation software (CaTCalc, obtained from the Research Institute of Computational Thermodynamics, Inc.). The liquid phase occurrence rate in this Example was 15% by mass or less.

<Method for Measuring Melting Point of First Powder and Melting Point of Second Powder>

Thermogravimetric Differential Thermal Analysis TG-DTA (STA7200RV obtained from Hitachi High-Tech Science Corporation) was used to measure the melting point of the first powder and the melting point of the second powder. After setting the powder samples in the Thermogravimetric Differential Thermal Analysis TG-DTA, the temperature was raised from room temperature to 700°C while flowing argon gas at 200 mL/min, to obtain TG-DTA curves. From the curves, the apices of endothermic peaks caused by melting of the first powder and the second powder were determined as the melting points of the first powder and the second powder.

"Relative density of the sintering precursor", "relative density of the sintered body", "area-weighted average grain size of the sintered body", and "amount of deformation of the sintered body" were evaluated by the following methods. The results are shown in Tables 1 and 2 below.

[Method of Measuring Relative Densities of Sintering Precursors and Sintered bodies]

The relative densities of the sintering precursors and the sintered bodies were measured by the Archimedes method in accordance with Japanese Industrial Standards (JIS) Z 2501:2000. Specifically, after measuring the weight A of the sintering precursors (or the sintered bodies) in the open air, the weight B of the sintering precursors (or the sintered bodies) when immersed in a liquid having a density $\rho 0$ was measured, and a density $\rho$ was calculated by the following equation.

$$\rho = A/(A-B) \times \rho 0$$

Pure water was used as the liquid, and an electronic balance (GR-120 obtained from A&D Company, Limited) and a specific gravity measuring kit (AD-1653 obtained from A&D Company, Limited) were used for weight measurement. Before the measurement in the liquid, in order to prevent the liquid from entering any open pores in the surfaces of the parts when immersed in the liquid, the sintering precursors were pretreated with waterproof spray, and the sintered bodies were impregnated with an oil, to seal any open pores thereof.

[Method for Measuring Area-Weighted Average Grain Size of Sintered bodies]

A cross-section of the sintered bodies was prepared using a cooling cross-section polisher (IB-19520CCP, obtained from JEOL). The cross-section was analyzed by the EBSD method using a scanning electron microscope (NVision40, obtained from Carl Zeiss AG) equipped with an EBSD detector (Hikari Super, obtained from TSL Solutions KK), to measure the average grain size.

[Method for Measuring Amount of Deformation of Sintered body]

As a method for evaluating the shape retainability of the sintered body (three-dimensional object), the amount of deformation of the sintered body was measured. When the sintering precursor having the hollow rectangular shape was set as shown in FIG. 4 and sintered, the center part of the sintering precursor bent by its own weight. The amount of this bending was defined as the amount of deformation of the sintered body. A dial gauge (ID-C125XB obtained from Mitutoyo Corporation) was set on a surface plate to set the zero point. Then, the heights of the front and back surfaces of the sample in the center part thereof were measured, and the difference between the heights was determined as the amount of deformation.

[Method for Measuring Voidage at Joining Interface]

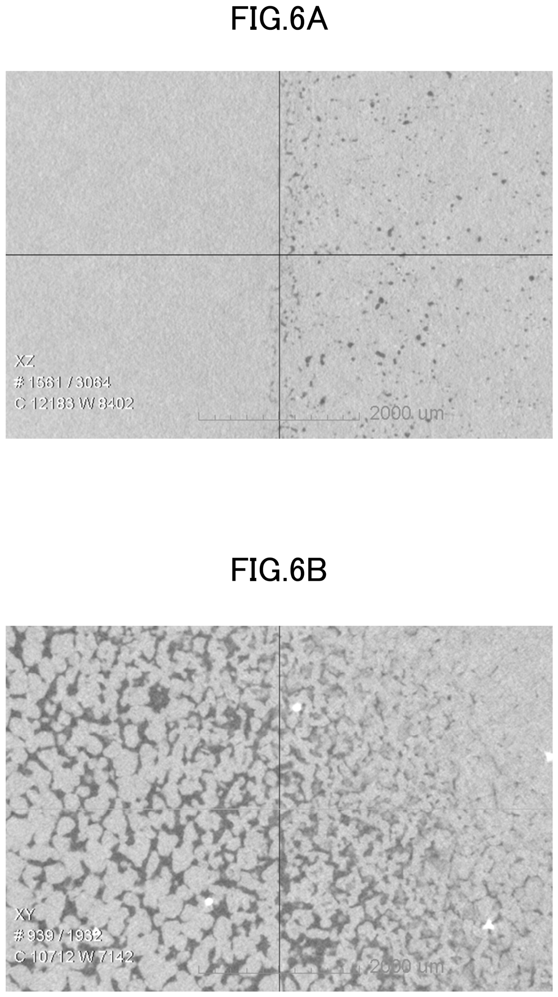

To evaluate the joining quality, the voidage at the joining interface was calculated. FIG. 5B shows a schematic view of the joined object as cut at the center part and viewed perpendicularly from a side. When the sintered body 60 and the joining-target member 70 were joined, a very thin intermediate layer 80 was formed by mutual diffusion of their constituent substances. A joining interface 90 exists in this intermediate layer. After the joined object was imaged by an X-ray CT device (Xradia 510 Versa obtained from Carl Zeiss AG), a tomogram of the joining interface present at the position 90 in the intermediate layer 80 as shown in FIG. 5B was acquired. The tomogram is shown in FIG. 6A. After the tomogram was binarized, the voidage was calculated and evaluated according to the following criteria.

A: The voidage is less than 3%.
B: The voidage is 3% or greater and less than 10%.
C: The voidage is 10% or greater.

For the grades of A and B, it is determined that a good joining interface was obtained.

(Examples 2 to 29 and Comparative Examples 1 to 8)

Sintered bodies were manufactured by the same method as in Example 1, except that the types and the volume average grain sizes (d50) of the first powder and the second powder were changed from those in the method of manufacturing the three-dimensional object of Example 1, and the various evaluations were performed. In Example 23 and Comparative Example 5, the melting points of the first powder and the second powder were measured using a STA 449 Jupiter obtained from NETZSCH Japan K.K, and the measurement range was from room temperature to 1,700°C. The results are shown in Tables 1 and 2

The joining evaluation was performed in a case where the sintered body was an aluminum alloy, that is, the joining evaluation was not performed in Examples 25 and 27. Similarly, the joining evaluation was not performed in Comparative Examples 4 to 6 in which the relative density of the sintered body was considerably low.

FIG. 6B shows a tomogram of the joining interface in Comparative Example 1. The voidage was evaluated as C, and the joining quality was worse than that in Example 1. The grain size of the sintered body in Comparative Example 1 was 100 μm, which was greater than that in Example 1. Therefore, in Comparative Example 1, the gap between the crystal grain boundaries was large, and the liquid phase was supplied locally to the rolled object, resulting in a joined surface with a large voidage.

(Examples 30 and 31)

Sintered objects were manufactured by the same method as in Example 1, except that the joining-target member was changed as shown in Table 2 from that used in the method of manufacturing the three-dimensional object of Example 1, and the various evaluations were performed. In these cases where rolled materials A6063 and A1050 were used as the joining-target members as well, a good joining quality was obtained, as in Example 1.

Details of the materials used in Examples 1 to 31 and Comparative Examples 1 to 8 are as follows.

- First Powder-
    - AlCr0.2 (obtained from Toyo Aluminum K.K.)
    - AlSi6Cr0.2 (obtained from Toyo Aluminum K.K.)
    - AlZr0.2 (obtained from Toyo Aluminum K.K.)
    - AlMn0.2
    - AlSc0.2
    - AlCr0.2Zr0.2 (obtained from Toyo Aluminum K.K.)
    - AlZr0.2Sc0.2
    - AlCr0.1 (obtained from Toyo Aluminum K.K.)
    - AlCr2 (obtained from Toyo Aluminum K.K.)
    - AlMg1Cr0.2Zr0.2 (obtained from Toyo Aluminum K.K.)
    - TiAl6V4B0.4
    - Al (obtained from Toyo Aluminum K.K.)
    - AlSil.2Cr0.2 (obtained from Toyo Aluminum K.K.)
    - AlSi9Cr0.2 (obtained from Toyo Aluminum K.K.)
    - AlMg0.2 (obtained from Toyo Aluminum K.K.)

- Second Powder-
    - AlSi12 (obtained from Toyo Aluminum K.K.)
    - AlCu33 (obtained from Toyo Aluminum K.K.)
    - AlSi4Cu22Zn20
    - AlSi12Mg1 (obtained from Toyo Aluminum K.K.)
    - AlSi12Cr0.2Zr0.2 (obtained from Toyo Aluminum K.K.)
    - AlSi10 (obtained from Toyo Aluminum K.K.)
    - AlSi14 (obtained from Toyo Aluminum K.K.)
    - TiAl50
    - CuMg43
    - Co
    - Zn
    - Si (obtained from Kojundo Chemical Laboratory Co., Ltd.)

Table 1

| Ex. | Powder material: First powder Compos. | d50 (μm) | Content (mass%) | m.p. (A) (°C) | Powder material: Second powder Compos. | d50 (μm) | Content (mass%) | m.p. (B) (°C) | m.p. diff. (A-B) (°C) | Sintering precursor: Relative ρ (%) | Sintered compact: Relative ρ (%) | Area-wtd. av. grain size (μm) | Area-wtd. av. grain size/vol. av. grain size of 1st powder | amt. of deformation (mm) | Joined object: Joining-target member | Joining temp. (°C) | Voidage at joining interface |
|---|---|---|---|---|---|---|---|---|---|---|---|---|---|---|---|---|---|
| 1 | AlCr0.2 | 55 | 90 | 659 | AlSi12 | 55 | 10 | 577 | 82 | 55 | 92 | 50 | 0.91 | 1.4 | A6061 | 600-630°C | B |
| 2 | AlSi6Cr0.2 | 55 | 90 | 600 | AlSi12 | 55 | 10 | 577 | 23 | 55 | 93 | 55 | 1.00 | 1.6 | A6061 | 580-610°C | B |
| 3 | AlCr0.2 | 55 | 90 | 659 | AlCu33 | 55 | 10 | 547 | 112 | 55 | 92 | 50 | 0.91 | 1.4 | A6061 | 590-620°C | B |
| 4 | AlCr0.2 | 55 | 90 | 659 | AlSi4Cu22Zn20 | 55 | 10 | 471 | 188 | 55 | 92 | 50 | 0.91 | 1.4 | A6061 | 600-630°C | B |
| 5 | AlCr0.2 | 55 | 93 | 659 | AlSi12 | 55 | 7 | 577 | 82 | 55 | 91 | 48 | 0.87 | 1.3 | A6061 | 610-640°C | A |
| 6 | AlCr0.2 | 55 | 85 | 659 | AlSi12 | 55 | 15 | 577 | 82 | 55 | 93 | 52 | 0.95 | 1.5 | A6061 | 580-610°C | B |
| 7 | AlCr0.2 | 55 | 80 | 659 | AlSi12 | 55 | 20 | 577 | 82 | 55 | 94 | 54 | 0.98 | 1.6 | A6061 | 580-610°C | B |
| 8 | AlCr0.2 | 55 | 70 | 659 | AlSi12 | 55 | 30 | 577 | 82 | 55 | 95 | 56 | 1.02 | 1.7 | A6061 | 580-610°C | B |
| 9 | AlCr0.2 | 55 | 90 | 659 | AlSi12 | 5 | 10 | 577 | 82 | 60 | 95 | 44 | 0.80 | 1.2 | A6061 | 600-630°C | A |
| 10 | AlCr0.2 | 55 | 90 | 659 | AlSi12 | 10 | 10 | 577 | 82 | 65 | 97 | 45 | 0.82 | 1.1 | A6061 | 600-630°C | A |
| 11 | AlCr0.2 | 55 | 90 | 659 | AlSi12 | 20 | 10 | 577 | 82 | 60 | 95 | 48 | 0.87 | 1.3 | A6061 | 600-630°C | A |
| 12 | AlZr0.2 | 55 | 90 | 660 | AlSi12 | 10 | 10 | 577 | 83 | 65 | 97 | 45 | 0.82 | 1.1 | A6061 | 600-630°C | A |
| 13 | AlMn0.2 | 55 | 90 | 659 | AlSi12 | 10 | 10 | 577 | 82 | 65 | 96 | 50 | 0.91 | 1.3 | A6061 | 600-630°C | B |
| 14 | AlSc0.2 | 55 | 90 | 660 | AlSi12 | 10 | 10 | 577 | 83 | 65 | 97 | 45 | 0.82 | 1.1 | A6061 | 600-630°C | A |
| 15 | AlCr0.2Zr0.2 | 55 | 90 | 659 | AlSi12 | 10 | 10 | 577 | 82 | 65 | 98 | 40 | 0.73 | 1.0 | A6061 | 600-630°C | A |
| 16 | AlZr0.2Sc0.2 | 55 | 90 | 659 | AlSi12 | 10 | 10 | 577 | 82 | 65 | 98 | 40 | 0.73 | 1.0 | A6061 | 600-630°C | A |
| 17 | AlCr0.1 | 55 | 90 | 659 | AlSi12 | 10 | 10 | 577 | 82 | 65 | 96 | 47 | 0.85 | 1.2 | A6061 | 600-630°C | A |
| 18 | AlCr2 | 55 | 90 | 659 | AlSi12 | 10 | 10 | 577 | 82 | 65 | 97 | 47 | 0.85 | 1.2 | A6061 | 610-640°C | A |
| 19 | AlMg1Cr0.2Zr0.2 | 55 | 90 | 649 | AlSi12 | 10 | 10 | 577 | 72 | 65 | 99 | 40 | 0.73 | 1.0 | A6061 | 580-610°C | A |
| 20 | AlCr0.2Zr0.2 | 55 | 90 | 649 | AlSi12Mg1 | 10 | 10 | 566 | 83 | 65 | 99 | 40 | 0.73 | 1.0 | A6061 | 600-630°C | A |

Table 2

| | | Powder material | | | | | | | | | Sintering precursor | Sintered compact | | | | Joined object | | |
|---|---|---|---|---|---|---|---|---|---|---|---|---|---|---|---|---|---|---|
| | | First powder | | | | Second powder | | | | | | | | | | | | |
| | | Compos. | d50 (µm) | Content (mass%) | m.p. (A) (°C) | Compos. | d50 (µm) | Content (mass%) | m.p. (B) (°C) | m.p. diff. (A-B) (°C) | Relative ρ (%) | Relative ρ (%) | Area-wtd. av. grain size (µm) | Area-wtd. av. grain size/vol. av. grain size of 1st powder | amt. of deformation (mm) | Joining-target member | Joining temp. (°C) | Voidage at joining interface |
| Ex. | 21 | AlMg1Cr0.2Zr0.2 | 55 | 90 | 649 | AlSi12Mg1 | 10 | 10 | 566 | 83 | 65 | 99 | 40 | 0.73 | 1.0 | A6061 | 580-610°C | A |
| | 22 | AlCr0.2Zr0.2 | 55 | 90 | 659 | AlSi12Cr0.2Zr0.2 | 10 | 10 | 577 | 82 | 65 | 98 | 38 | 0.69 | 0.9 | A6061 | 600-630°C | A |
| | 23 | AlCr0.2Zr0.2 | 55 | 90 | 659 | AlSi10 | 10 | 10 | 580 | 79 | 65 | 98 | 40 | 0.73 | 1.0 | A6061 | 600-630°C | A |
| | 24 | AlCr0.2Zr0.2 | 55 | 90 | 659 | AlSi14 | 10 | 10 | 577 | 82 | 65 | 98 | 40 | 0.73 | 1.0 | A6061 | 590-620°C | A |
| | 25 | TiAl6V4B0.4 | 55 | 90 | 1600 | TiAl50 | 10 | 10 | 1430 | 170 | 65 | 97 | 45 | 0.82 | 1.1 | - | - | - |
| | 26 | AlCr0.2 | 55 | 90 | 659 | CuMg43 | 55 | 10 | 568 | 91 | 55 | 92 | 50 | 0.91 | 1.4 | A6061 | 510-540°C | B |
| | 27 | TiAl6V4B0.4 | 55 | 90 | 1600 | Co | 10 | 10 | 1495 | 105 | 65 | 97 | 45 | 0.82 | 1.1 | - | - | - |
| | 28 | AlCr0.2 | 50 | 90 | 659 | AlSi12 | 10 | 10 | 577 | 82 | 63 | 96 | 42 | 0.84 | 1.1 | A6061 | 600-630°C | A |
| | 29 | AlCr0.2 | 60 | 90 | 659 | AlSi12 | 10 | 10 | 577 | 82 | 63 | 96 | 48 | 0.80 | 1.2 | A6061 | 600-630°C | A |
| | 30 | AlCr0.2 | 55 | 90 | 659 | AlSi12 | 55 | 10 | 577 | 82 | 55 | 92 | 50 | 0.91 | 1.4 | A6063 | 600-630°C | B |
| | 31 | AlCr0.2 | 55 | 90 | 659 | AlSi12 | 55 | 10 | 577 | 82 | 55 | 92 | 50 | 0.91 | 1.4 | A1050 | 600-630°C | B |
| Comp. Ex. | 1 | Al | 55 | 90 | 660 | AlSi12 | 55 | 10 | 577 | 83 | 55 | 88 | 100 | 1.82 | 3.0 | A6061 | 600-630°C | C |
| | 2 | AlSi1.2Cr0.2 | 55 | 100 | 646 | - | - | - | - | - | 55 | 90 | 120 | 2.18 | 3.5 | A6061 | 600-630°C | C |
| | 3 | AlSi9Cr0.2 | 55 | 90 | 590 | AlSi12 | 55 | 10 | 577 | 13 | 55 | 93 | 100 | 1.82 | 3.0 | A6061 | 580-610°C | C |
| | 4 | AlCr0.2 | 55 | 90 | 659 | Zn | 55 | 10 | 420 | 239 | 55 | 84 | 50 | 0.91 | 1.4 | - | - | - |
| | 5 | AlCr0.2 | 55 | 90 | 659 | Si | 55 | 10 | 1414 | -755 | 55 | 80 | 50 | 0.91 | 1.4 | - | - | - |
| | 6 | AlCr0.2 | 55 | 95 | 659 | AlSi12 | 55 | 5 | 577 | 82 | 55 | 75 | 42 | 0.76 | 0.6 | - | - | - |
| | 7 | AlCr0.2 | 55 | 60 | 659 | AlSi12 | 55 | 40 | 577 | 82 | 55 | 95 | 120 | 2.18 | 3.5 | A6061 | 580-610°C | C |
| | 8 | AlMg0.2 | 55 | 90 | 660 | AlSi12 | 55 | 10 | 577 | 83 | 55 | 88 | 100 | 1.82 | 3.0 | A6061 | 600-630°C | C |

Embodiments of the present disclosure include, for example, the following.

<1> A powder material, including:

a first powder composed of a first alloy; and
a second powder composed of a pure metal or a second alloy having a composition different from a composition of the first alloy,
wherein a difference (A-B) between a melting point (A) of the first powder and a melting point (B) of the second powder is 15°C or greater and 200°C or less;
content of the second powder is 7% by mass or greater and 30% by mass or less relative to a total amount of the powder material, and

(i) an area-weighted average grain size of a sintered body, obtained by sintering the powder material at a maximum temperature that is between the melting point of the first powder and the melting point of the second powder, is less than 1.80 times a volume average grain size of the first powder, and/or, (ii) the first alloy is a titanium alloy which contains at least boron (B), or an aluminum alloy which contains at least one of chromium (Cr), zirconium (Zr), scandium (Sc), or manganese (Mn).

<2> A powder material, including:

a first powder composed of a first alloy; and
a second powder composed of a pure metal or a second alloy having a composition different from a composition of the first alloy,
wherein a difference (A-B) between a melting point (A) of the first powder and a melting point (B) of the second powder is 15°C or greater and 200°C or less,
content of the second powder is 7% by mass or greater and 30% by mass or less relative to a total amount of the powder material, and
an area-weighted average grain size of a sintered body, obtained by sintering the powder material at a maximum temperature that is between the melting point of the first powder and the melting point of the second powder, is less than 1.80 times a volume average grain size of the first powder.

<3> A powder material, including:

a first powder composed of a first alloy; and
a second powder composed of a pure metal or a second alloy having a composition different from a composition of the first alloy,
wherein the first alloy is a titanium alloy which contains at least boron (B), or an aluminum alloy which contains at least one of chromium (Cr), zirconium (Zr), scandium (Sc), or manganese (Mn)

<4> The powder material according to any one of <1> to <3>,
wherein the first alloy contains aluminum.
<5> The powder material according to <4>,
wherein the first alloy is an aluminum alloy.
<6> The powder material according to <4> or <5>,
wherein the first alloy contains at least one of chromium (Cr), zirconium (Zr), scandium (Sc), or manganese (Mn).
<7> The powder material according to any one of <1> to <6>,
wherein the first alloy contains three or more types of metals.
<8> The powder material according to any one of <1> to <7>,
wherein the second alloy is an aluminum alloy.
<9> The powder material according to any one of <1> to <8>,
wherein a volume average grain size of the first powder is greater than a volume average grain size of the second powder.
<10> The powder material according to any one of <1> to <9>,
wherein a volume average grain size of the first powder is 10 μm or greater and 100 μm or less.
<11> A method of manufacturing a three-dimensional object, including:

forming a powder layer by supplying a powder material containing a first powder composed of a first alloy and a second powder composed of a pure metal or a second alloy having a composition different from a composition of the first alloy;
applying a liquid modeling agent to the powder layer;
forming a sintering precursor by repeating the forming of the powder layer and the applying of the liquid modeling agent; and

sintering the sintering precursor,
wherein a difference (A-B) between a melting point (A) of the first powder and a melting point (B) of the second powder is 15°C or greater and 200°C or less,
content of the second powder is 7% by mass or greater and 30% by mass or less relative to a total amount of the powder material, and

(i) an area-weighted average grain size of the three-dimensional object obtained by sintering the sintering precursor at a maximum temperature that is between the melting point of the first powder and the melting point of the second powder is less than 1.80 times a volume average grain size of the first powder, and/or, (ii) the first alloy is a titanium alloy which contains at least boron (B), or an aluminum alloy which contains at least one of chromium (Cr), zirconium (Zr), scandium (Sc), or manganese (Mn).

<12> A method of manufacturing a joined object, including: heating the three-dimensional object manufactured by the method of manufacturing the three-dimensional object of <11> and an object containing a metal while bringing the three-dimensional object and the object containing the metal into direct contact with each other, to obtain a joined object.
<13> The method of manufacturing the joined object according to <12>,
wherein the heating includes heating the three-dimensional object in a temperature range in which a liquid phase occurs in the three-dimensional object.

According to the powder material according to any one of <1> to <10>, the method of manufacturing a three-dimensional object according to <11>, and the method of manufacturing a joined object according to any one of <12> and <13>, it is possible to solve the problems in the related art described above and to achieve the object of the present disclosure.

## Claims

**1.** A powder material, comprising:

a first powder composed of a first alloy; and
a second powder composed of a pure metal or a second alloy having a composition different from a composition of the first alloy,
wherein a difference (A-B) between a melting point (A) of the first powder and a melting point (B) of the second powder is 15°C or greater and 200°C or less,
content of the second powder is 7% by mass or greater and 30% by mass or less relative to a total amount of the powder material, and

(i) an area-weighted average grain size of a sintered body, obtained by sintering the powder material at a maximum temperature that is between the melting point of the first powder and the melting point of the second powder, is less than 1.80 times a volume-average grain size of the first powder, and/or, (ii) the first alloy is a titanium alloy which contains at least boron (B), or an aluminum alloy which contains at least one of chromium (Cr), zirconium (Zr), scandium (Sc), or manganese (Mn).

**2.** The powder material according to claim 1,
wherein the first alloy contains aluminum.

**3.** The powder material according to claim 2,
wherein the first alloy is the aluminum alloy.

**4.** The powder material according to claim 2 or 3,
wherein the first alloy contains at least one of chromium (Cr), zirconium (Zr), scandium (Sc), or manganese (Mn).

**5.** The powder material according to any one of claims 1 to 4,
wherein the first alloy contains three or more types of metals.

**6.** The powder material according to any one of claims 1 to 5,
wherein the second alloy is an aluminum alloy.

7. The powder material according to any one of claims 1 to 6,
wherein the volume average grain size of the first powder is greater than a volume average grain size of the second powder.

8. The powder material according to any one of claims 1 to 7,
wherein the volume average grain size of the first powder is 10 μm or greater and 100 μm or less.

9. A method of manufacturing a three-dimensional object, comprising:

forming a powder layer by supplying a powder material containing a first powder composed of a first alloy and a second powder composed of a pure metal or a second alloy having a composition different from a composition of the first alloy;
applying a liquid modeling agent to the powder layer;
forming a sintering precursor by repeating the forming of the powder layer and the applying of the liquid modeling agent; and
sintering the sintering precursor,
wherein a difference (A-B) between a melting point (A) of the first powder and a melting point (B) of the second powder is 15°C or greater and 200°C or less,
content of the second powder is 7% by mass or greater and 30% by mass or less relative to a total amount of the powder material, and

(i) an area-weighted average grain size of the three-dimensional object obtained by sintering the sintering precursor at a maximum temperature of between the melting point of the first powder and the melting point that is the second powder is less than 1.80 times a volume average grain size of the first powder, and/or, (ii) the first alloy is a titanium alloy which contains at least boron (B), or an aluminum alloy which contains at least one of chromium (Cr), zirconium (Zr), scandium (Sc), or manganese (Mn).

10. A method of manufacturing a joined object, comprising:
heating the three-dimensional object manufactured by the method of manufacturing the three-dimensional object of claim 9 and an object containing a metal while bringing the three-dimensional object and the object containing the metal into direct contact, to obtain a joined object.

11. The method of manufacturing the joined object according to claim 10,
wherein the heating comprises heating the three-dimensional object in a temperature range in which a liquid phase occurs in the three-dimensional object.

FIG.1

DEBINDING STEP
SINTERING STEP
TEMPER-ATURE
TIME

FIG.2A

12
13
20
30
20
Δt1
Z1
Z2
21
22
23
24

# FIG.2B

13
12
20
Y2
20
30
20
21
22
23
24

# FIG.2C

13
Y2
12
20
30
20
21
22
23
24

# FIG.2D

13
12
Y1
20
30
31
20
21
22
23
24

# FIG.2E

52
13
12
20
10
30
20
21
22
23
24

FIG.3

10mm
13mm
5mm
3mm
3mm
35mm

FIG.4

AMOUNT OF DEFORMATION OF SINTERED BODY

FIG.5A

6 0
7 0

FIG.5B

60
80
90
70

FIG.6A

XZ
# 1561 / 3064
C 12183 W 8402
2000 um

FIG.6B

XY
# 939 / 1932
C 10712 W 7142
2000 um

Europäisches
Patentamt
European
Patent Office
Office européen
des brevets

# EUROPEAN SEARCH REPORT

Application Number
EP 26 15 2301

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2024/316635 A1 (OYA NAOKI [DE] ET AL) 26 September 2024 (2024-09-26)<br>* paragraph [0035] *<br>* paragraph [0041] *<br>* paragraph [0192] - paragraph [0193] *<br>* paragraph [0204] - paragraph [0205] *<br>----- | 1-3,6,8,9<br>10,11 | INV.<br>B22F1/00<br>B22F3/10<br>B22F7/06<br>B22F7/08<br>B22F10/14<br>B33Y10/00<br>B33Y70/00<br>C22C1/04<br>C22C21/00<br><br>ADD.<br>B22F1/102 |
| X<br>Y | EP 4 417 344 A1 (MITSUBISHI MATERIALS CORP [JP]) 21 August 2024 (2024-08-21)<br>* claims 1-5 *<br>* paragraph [0036] *<br>* paragraph [0060] - paragraph [0061] *<br>* paragraph [0073] - paragraph [0074] *<br>* paragraph [0077] *<br>* paragraph [0090] *<br>* paragraph [0100] - paragraph [0101] *<br>* figure 2 *<br>----- | 1-3,6,8,9<br>10,11 | |
| X<br>Y | US 5 613 184 A (PURNELL CHARLES G [GB] ET AL) 18 March 1997 (1997-03-18)<br>* claims 1,5-6 *<br>* column 2, line 1 - line 5 *<br>* column 3 - column 4 *<br>* tables 1-3 *<br>----- | 1-8<br>10,11 | TECHNICAL FIELDS SEARCHED (IPC)<br><br>B22F<br>B33Y<br>C22C |
| X<br>Y | US 6 391 252 B1 (DAVID FRANCOIS [FR] ET AL) 21 May 2002 (2002-05-21)<br>* claims 1-6,23 *<br>----- | 1,5,6<br>10,11 | |
| X | WO 2017/077137 A2 (INNOMAQ 21 S L [ES]) 11 May 2017 (2017-05-11)<br>* claims 1-6 *<br>* example 11 *<br>* page 152, lines 46-51 *<br>* page 178, lines 26-31 *<br>* page 156, line 45 *<br>----- | 1-9 | |

The present search report has been drawn up for all claims

1

| Place of search | Date of completion of the search | Examiner |
|---|---|---|
| The Hague | 25 June 2026 | Järvi, Tommi |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 26 15 2301

This annex lists the patent family members relating to the patent documents cited in the above-mentioned European search report. The members are as contained in the European Patent Office EDP file on The European Patent Office is in no way liable for these particulars which are merely given for the purpose of information.

25-06-2026

| Patent document cited in search report | Publication date | Patent family member(s) | Publication date |
|---|---|---|---|
| US 2024316635 A1 | 26-09-2024 | EP 4434653 A1 | 25-09-2024 |
| | | JP 2024135253 A | 04-10-2024 |
| | | US 2024316635 A1 | 26-09-2024 |
| EP 4417344 A1 | 21-08-2024 | CN 118119464 A | 31-05-2024 |
| | | EP 4417344 A1 | 21-08-2024 |
| | | JP 7868619 B2 | 02-06-2026 |
| | | JP WO2023063170 A1 | 20-04-2023 |
| | | TW 202333875 A | 01-09-2023 |
| | | US 2025083225 A1 | 13-03-2025 |
| | | WO 2023063170 A1 | 20-04-2023 |
| US 5613184 A | 18-03-1997 | DE 69412862 T2 | 12-05-1999 |
| | | EP 0746633 A1 | 11-12-1996 |
| | | ES 2119199 T3 | 01-10-1998 |
| | | GB 2294475 A | 01-05-1996 |
| | | US 5613184 A | 18-03-1997 |
| | | WO 9429489 A1 | 22-12-1994 |
| US 6391252 B1 | 21-05-2002 | AT E276064 T1 | 15-10-2004 |
| | | CA 2350655 A1 | 18-05-2000 |
| | | DE 69920257 T2 | 27-01-2005 |
| | | EP 1131177 A1 | 12-09-2001 |
| | | ES 2228174 T3 | 01-04-2005 |
| | | FR 2785559 A1 | 12-05-2000 |
| | | IL 142792 A | 20-08-2006 |
| | | JP 4023999 B2 | 19-12-2007 |
| | | JP 2002529595 A | 10-09-2002 |
| | | KR 20010104662 A | 26-11-2001 |
| | | US 6391252 B1 | 21-05-2002 |
| | | WO 0027570 A1 | 18-05-2000 |
| WO 2017077137 A2 | 11-05-2017 | CA 3003619 A1 | 11-05-2017 |
| | | EP 3371338 A2 | 12-09-2018 |
| | | JP 7156948 B2 | 19-10-2022 |
| | | JP 2019502028 A | 24-01-2019 |
| | | JP 2023002601 A | 10-01-2023 |
| | | JP 2026090287 A | 02-06-2026 |
| | | KR 20180109851 A | 08-10-2018 |
| | | SG 11201803697S A | 28-06-2018 |
| | | US 2018318922 A1 | 08-11-2018 |
| | | US 2022134421 A1 | 05-05-2022 |
| | | US 2025339898 A1 | 06-11-2025 |
| | | WO 2017077137 A2 | 11-05-2017 |



For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2021088775 A